# EUROPEAN PATENT APPLICATION

(11) **EP 3 834 625 A1**
(43) Date of publication of application: **16.06.2021**
(21) Application number: 19846674.0
(22) Date of filing: 05.08.2019
(51) Int. Cl.: A23L 3/3499, A01N 43/16, A01P 3/00, A23F 3/16, A23F 5/24, A23L 2/00, A23L 2/02, A23L 2/38, A23L 2/42, A23L 2/52, C12G 3/00

(54) **AGENT FOR SUPPRESSING MICROBIAL GROWTH, METHOD FOR PREVENTING MICROBIAL CONTAMINATION, AND BEVERAGE**

(30) Priority: 10.08.2018 JP 2018151539
(71) Applicant: Suntory Holdings Limited, Osaka 530-8203 (JP)
(72) Inventor: FUKIZAWA, Shinya, Soraku-gun, Kyoto 619-0284 (JP); NONAKA, Yuji, Soraku-gun, Kyoto 619-0284 (JP); WAKABAYASHI, Kenichi, Soraku-gun, Kyoto 619-0284 (JP); YAMASHITA, Mai, Soraku-gun, Kyoto 619-0284 (JP)
(74) Representative: Vossius & Partner Patentanwälte Rechtsanwälte mbB
(86) International application number: PCT/JP2019/030714
(87) International publication number: WO 2020/031953

(57) **Abstract**

The present invention aims to provide a growth inhibitor for microorganisms, a method of preventing contamination by microorganisms, and, a beverage, each of which utilizes as an active ingredient a thermally stable substance having antibacterial action against various microorganisms. The present invention relates to a growth inhibitor for microorganisms containing isoxanthohumol as an active ingredient, a method of preventing contamination by microorganisms using the same, and a beverage containing the same.

## Description

### TECHNICAL FIELD

The present invention relates to a growth inhibitor for microorganisms which contains isoxanthohumol, a method of preventing contamination by microorganisms using isoxanthohumol, and a beverage containing isoxanthohumol.

### BACKGROUND ART

It is important to prevent contamination of commercially available beverages by microorganisms such as yeasts, bacteria, and molds and thereby increase the preservability of the beverages. Typical methods of preventing contamination by microorganisms include: decreasing the pH to a value in the acidic range; lowering the water activity by drying or the like; heating; storing at low temperatures; adding a preservative; aseptic packaging; and nitrogen flush packaging. A sterilization method for a beverage and the resistance of the beverage to bacteria can be influenced by the beverage properties such as the contained components (e.g., sugar, fruit juice, alcohol, vitamin, or micronutrient contents), carbon dioxide content, water quality, and pH, and by the species of the microorganism(s) to be killed. Thus, a safe, natural substance having antibacterial action against various microorganisms has been eagerly sought.

Xanthohumol is known as a component of hops (scientific name: *Humulus lupulus)* that are a plant of the family Cannabaceae and are used as raw materials of beer. Xanthohumol is a polyphenol having a molecular formula represented by C₂₁H₂₂O₅, and is particularly classified as "prenylchalcone" within polyphenols. Xanthohumol has been reported to have the following physiological activities: carcinogenesis inhibitory action, anti-inflammatory action, anti-obesity action, bone resorption inhibitory action, and antibacterial action, for example.

For example, Patent Literature 1 discloses a preservative for foods containing xanthohumol of a hop cone component as an active ingredient, wherein xanthohumol has antibacterial action against specific putrefactive bacteria (e.g., *Bacillus subtilis*). However, whether or not xanthohumol has antibacterial action against other putrefactive bacteria is not known, and Patent Literature 1 does not mention the antibacterial action against Thermo-Acidophilic Bacilli.

Xanthohumol is irreversibly structurally converted into isoxanthohumol when heated. In particular, it has been reported that a large portion of xanthohumol is converted into isoxanthohumol during beer brewing.

According to a report, while xanthohumol and isoxanthohumol both have prenyl groups, the former has a chalcone skeleton as a partial structure and the latter has a flavanone skeleton as a partial structure, with different physicochemical properties and physiological activities therebetween. Patent Literature 2 states that while xanthohumol has very effective anticancer action, isoxanthohumol hardly has anticancer action. Thus, it is difficult to analogize the physiological activity of isoxanthohumol based on information regarding the physiological activity of xanthohumol.

### CITATION LIST

### - Patent Literature

Patent Literature 1: JP 4374123 B
Patent Literature 2: JP 2007-289185 A

### SUMMARY OF INVENTION

### - Technical Problem

Patent Literature 1 states that xanthohumol shows antibacterial action in food. Yet, no such antibacterial action has been reported regarding isoxanthohumol produced by irreversible structural conversion of xanthohumol as a result of heating.

Also, a thermally stable substance contributing to the antibacterial action in food and beverages is desired because production of beverages, for example, requires heating under the sterile conditions in conformity with the Food Sanitation Act.

The present invention aims to provide a growth inhibitor for microorganisms, a method of preventing contamination by microorganisms, and a beverage, each of which utilizes as an active ingredient a thermally stable substance having antibacterial action against various microorganisms.

### - Solution to Problem

As a result of intensive studies to solve the above problems, the present inventors discovered that isoxanthohumol has antibacterial action against various microorganisms. The present inventors also found applicability of isoxanthohumol to various beverages and the like because isoxanthohumol is thermally resistant and is therefore highly suitable for beverage applications as compared to xanthohumol. The present invention was thus completed.

Isoxanthohumol is a substance that is also found in a trace amount in hops *(Humulus lupulus* L), and it shows antibacterial action and is highly suitable for beverage applications. Thus, with use of isoxanthohumol, it is possible to develop beverages and the like which are highly safe and have high storage stability.

In other words, the present invention relates to the following growth inhibitor for microorganisms, method of preventing contamination of a beverage by microorganisms, and beverage.
[1] A growth inhibitor for microorganisms containing isoxanthohumol as an active ingredient.
[2] The growth inhibitor for microorganisms according to [1] above, which is for beverage use.
[3] The growth inhibitor for microorganisms according to [1] or [2] above, wherein the microorganisms are at least one bacterium selected from the group consisting of a bacterium of the genus *Alicyclobacillus,* a bacterium of the genus *Bacillus,* a bacterium of the genus *Clostridium,* and a bacterium of the genus *Staphylococcus.*
[4] The growth inhibitor for microorganisms according to any one of [1] to [3] above, wherein the microorganisms are at least one species selected from the group consisting of *Alicyclobacillus acidoterrestris, Bacillus cereus, Clostridium perfringens, Clostridium difficile,* and *Staphylococcus aureus.*
[5] A method of preventing contamination of a beverage by microorganisms, including adding isoxanthohumol to a concentration of 25 mass ppm or more.
[6] The method of preventing contamination by microorganisms according to [5] above, wherein isoxanthohumol is added to a concentration of 50 mass ppm or more.
[7] The method of preventing contamination by microorganisms according to [5] or [6] above, further including adjusting a pH of the beverage to 4.6 or lower.
[8] The method of preventing contamination by microorganisms according to any one of [5] to [7] above, wherein the microorganisms are at least one bacterium selected from the group consisting of a bacterium of the genus *Alicyclobacillus,* a bacterium of the genus *Bacillus,* a bacterium of the genus *Clostridium,* and a bacterium of the genus *Staphylococcus.*
[9] The method of preventing contamination by microorganisms according to any one of [5] to [8] above, wherein the microorganisms are at least one species selected from the group consisting of *Alicyclobacillus acidoterrestris, Bacillus cereus, Clostridium perfringens, Clostridium difficile,* and *Staphylococcus aureus.*
[10] A beverage containing more than 50 mass ppm and 180 mass ppm or less of isoxanthohumol and having a pH of 4.6 or lower.
[11] The beverage according to [10] above, which contains 60 mass ppm or more of isoxanthohumol.
[12] The beverage according to [10] or [11] above, which is an alcohol beverage, non-alcoholic beer taste beverage, carbonated beverage, functional beverage, or fruit and/or vegetable-based beverage.
[13] The beverage according to any one of [10] to [12] above, which is a non-alcoholic beer taste beverage, functional beverage, carbonated beverage, or fruit and/or vegetable-based beverage.

### - Advantageous Effects of Invention

The present invention can provide a growth inhibitor for microorganisms, a method of preventing contamination by microorganisms, and a beverage, each of which utilizes an active ingredient a thermally stable substance having an antibacterial action against various microorganisms.

### DESCRIPTION OF EMBODIMENTS

The growth inhibitor for microorganisms of the present invention contains isoxanthohumol as an active ingredient.

Isoxanthohumol, thermally stable and having antibacterial action, shows the effect of inhibiting the growth of microorganisms even when added to a beverage which requires heating under the sterile conditions in conformity with the Food Sanitation Act in production. Thus, the growth inhibitor for microorganisms according to the present invention is suitably used for food and beverages which require heating in the production process, particularly for beverages.

The growth inhibitor for microorganisms of the present invention is therefore preferably for beverage use.

Isoxanthohumol can be prepared, for example, through a process such as heating of a hop *(Humulus lupulus)* extract. Heating a hop extract can produce isoxanthohumol in the extract. A hop extract is usually prepared through a process involving extraction of hop cones with a solvent and purification as needed. A hop extract can be obtained by a known preparation method. Hops can be extracted, for example, by a method that uses an ethanol solvent, which is used as a preparation method of a hop extract for beer brewing. A hop extract is commercially available, and a commercial hop extract can also be used. Heating of a hop extract to produce isoxanthohumol is preferably performed at 80°C to 140°C (more preferably 85°C to 100°C) for 15 minutes to 5 hours (more preferably 20 minutes to 3 hours). Purification of a hop extract to prepare isoxanthohumol is performed by a known method. Purification is performed by, for example, a method using HPLC or an absorption column or a precipitation method based on changes in solubility. Isoxanthohumol can also be produced by heating xanthohumol. Here, the heating temperature is preferably 80°C to 140°C (more preferably 85°C to 100°C) for 15 minutes to 5 hours (more preferably 20 minutes to 3 hours).

It has been reported that isoxanthohumol is stable even at a high temperature of 100°C, for example. The Food Sanitation Act defines sterilization conditions as the production standard of soft drinks and the like. For example, soft drinks having a pH of 4.0 or higher (excluding soft drinks having a pH of 4.6 or higher and a water activity higher than 0.94) need to be heated at 85°C for 30 minutes. Stably present in a beverage through such a sterilization process, isoxanthohumol is advantageously added to a beverage. Thus, the present invention can provide a beverage containing a safe growth inhibitor for microorganisms having antibacterial action against various microorganisms.

Microorganisms in the academic definition encompass not only bacteria but also fungi (e.g., mushrooms, molds, yeasts), viruses, microalgae, and the like. Herein, however, microorganisms refer to bacteria.

In the growth inhibitor for microorganisms of the present invention, the microorganisms preferably include at least one bacterium selected from the group consisting of a bacterium of the genus *Alicyclobacillus,* a bacterium of the genus *Bacillus,* a bacterium of the genus *Clostridium,* and a bacterium of the genus *Staphylococcus.*

More preferably, the microorganisms include at least one species selected from the group consisting of *Alicyclobacillus acidoterrestris, Bacillus cereus, Clostridium perfringens, Clostridium difficile,* and *Staphylococcus aureus.*

Isoxanthohumol shows antibacterial action against these microorganisms.

*Alicyclobacillus acidoterrestris* is a Thermo-Acidophilic Bacilli belonging to the genus *Alicyclobacillus* which are gram-positive, spore-forming bacteria. Thermo-Acidophilic Bacilli do not die immediately in the typical thermal sterilization under the acidic conditions with a pH of 6.5 or lower. Thermo-Acidophilic Bacilli are known to deteriorate the quality of food and beverages when grown, with their action to convert ferulic acid in fruit juice to guaiacol which is an odor-causing substance. Known methods to prevent this include sterilization at higher temperatures than the standard temperature and use of benzoic acid. These methods, however, have not been put into practical use because the sterilization spoils the flavors of food and beverages and benzoic acid is avoided as it is a synthetic preservative.

*Bacillus cereus* is a gram-positive, facultatively anaerobic, rod-shaped, spore forming bacterium belonging to the genus *Bacillus.* It is a food poisoning bacterium often found in the nature such as soil and filthy water.

*Clostridium perfringens* is commonly called *"Bacillus welchii"* and is an obligate anaerobic, rod-shaped bacterium belonging to the genus *Clostridium.* It is part of the normal bacterial flora in the intestinal tracts of humans and non-human animals and also widely present in the nature such as soil. Certain stains of *Bacillus welchii* able to produce an enterotoxin cause food poisoning.

*Clostridium difficile* is found in the nature such as soil, hay, and sand and in the intestinal tracts and feces of humans and non-human animals. It forms subterminal spores and is therefore stable in severe environments such as acidic, alkaline, aerobic, high-temperature, and/or low nutrition conditions.

*Staphylococcus aureus* is a gram-positive, facultatively anaerobic, round-shaped bacterium. It is part of the normal bacterium flora on the skin surface and skin pores of humans. Stains of *Staphylococcus aureus* capable of producing an enterotoxin secrete the toxin when grown in food. Intake of an enterotoxin together with food causes *Staphylococcal* food poisoning. *Staphylococcal* enterotoxins are not inactivated by ordinary cooking as they are thermally stable (100°C, 30 minutes), and they are also stable when frozen. *Staphylococcus aureus* is highly toxic among the *Staphylococcus* bacteria present as part of the bacterial flora on the human skin.

The microorganisms above are to be detected in inspection as bacteria spoiling food and beverages. In particular, Thermo-Acidophilic Bacilli (*Alicyclobacillus acidoterrestris)* problematically grow in acidic beverages.

The present invention also relates to a method of preventing contamination of a beverage by microorganisms, including adding isoxanthohumol to a concentration of 25 mass ppm or more.

Adding isoxanthohumol to a beverage to a concentration of 25 mass ppm or more can sufficiently achieve the effect of inhibiting the growth of microorganisms including Thermo-Acidophilic Bacilli.

Isoxanthohumol is more preferably added to a concentration of 50 mass ppm or more. This can lead to the effect of inhibiting the growth of various microorganisms, i.e., lead to a sufficient antibacterial action.

A larger amount of isoxanthohumol added is expected to produce a better effect of preventing contamination by microorganisms. Yet, the method of preventing contamination of a beverage by microorganisms according to the present invention preferably includes adding isoxanthohumol to a beverage to a concentration of 500 mass ppm or less in order to maintain the essential flavor of the beverage.

Isoxanthohumol is preferably added to a beverage to a concentration of 25 to 500 mass ppm, more preferably to 50 to 500 mass ppm.

Isoxanthohumol is a substance that has unique sourness and bitterness and produces bitterness and sourness when added in a large amount to a beverage.

Bitterness and sourness are included in the five basic tastes, namely sweetness, sourness, bitterness, saltiness, and umami, and are the sensations produced by stimulation of taste buds on the tongue. The taste and deliciousness of food or a beverage are based on various factors, including the basic tastes perceived by the taste buds as described above, pain caused by direct stimulation of skin in the mouth, temperature sensation, and smell perceived by the nose, and are therefore a variety of information perceived together.

A known method of reducing sourness or bitterness of a beverage or the like is typically adding a substance having sweetness, such as a sugar, an amino acid, or a nucleic acid. This method does not remove the sourness or bitterness itself but covers the sourness and bitterness with strong sweetness.

Sweetness is most perceivable in the body temperature (37°C) range, but unfortunately tends to be less perceivable due to the thermal stimulation in the low temperature range (5°C or lower) and the high temperature range (55°C or higher). In contrast, bitterness and sourness are highly perceivable also in the low temperature range. Sourness tends to be perceivable in the high temperature range as well. Thus, a low temperature (5°C or lower) beverage has less perceivable sweetness and more perceivable bitterness and sourness than a room temperature (25°C) beverage containing the same components as the low temperature beverage. The room temperature beverage, in contrast, has more perceivable sweetness and less perceivable bitterness and sourness since the sweetness masks the bitterness and sourness.

Solid foods and beverages are different in their forms as they are solid and liquid, respectively. Beverages, which are liquid, spread in the mouth immediately after being put in the mouth and come into contact with many of the taste buds on the tongue, tending to have a stronger taste and be more perceivable.

Accordingly, the taste and deliciousness of a food or beverage perceived by a human are influenced by the temperature and conditions of the food or beverage as well as the components in the food or beverage and the amounts thereof.

From the viewpoint of the beverage flavor, isoxanthohumol is more preferably added to a beverage to a concentration of 200 mass ppm or less, still more preferably to 180 mass ppm or less. A beverage according to one embodiment of the present invention preferably contains 200 mass ppm or less, more preferably 180 mass ppm or less, of isoxanthohumol.

The growth inhibitor for microorganisms and the method of preventing contamination of a beverage by microorganisms according to the present invention are preferably used for beverages having a pH of 4.6 or lower, more preferably for beverages having a pH of 4.0 or lower. This is because there remains a risk of microbial contamination by Thermo-Acidophilic Bacilli after the thermal sterilization in conformity with the production standards under the Food Sanitation Act where beverages having a pH lower than 4.0 need to be thermally sterilized at 65°C for 10 minutes or under equivalent or better conditions, and those having a pH of 4.0 or higher and lower than 4.6 at 85°C for 30 minutes or under equivalent or better conditions.

In one embodiment, the method of preventing contamination of a beverage by microorganisms according to the present invention preferably includes adjusting the pH of the beverage to 4.6 or lower. This is because, as described above, the method of preventing contamination of a beverage by microorganisms according to the present invention is suitably used to prevent contamination of a beverage by Thermo-Acidophilic Bacilli. The method of the present invention more preferably includes adjusting the pH of the beverage to 4.0 or lower. This is because there remains a risk of microbial contamination by Thermo-Acidophilic Bacilli after the thermal sterilization in conformity with the production standards under the Food Sanitation Act where beverages having a pH lower than 4.0 need to be thermally sterilized at 65°C for 10 minutes or under equivalent or better conditions, and those having a pH of 4.0 or higher and lower than 4.6 at 85°C for 30 minutes or under equivalent or better conditions.

The method may include adjusting the pH of the beverage to lower than 4.6 or lower than 4.0.

The pH of a beverage required to be the above pH value is the final pH.

The pH can be adjusted as needed by, for example, a known method such as adding a pH adjustor. The pH can be measured with a commercially available pH meter.

In the method of preventing contamination of a beverage by microorganisms, the microorganisms preferably include at least one bacterium selected from the group consisting of a bacterium of the genus *Alicyclobacillus,* a bacterium of the genus *Bacillus,* a bacterium of the genus *Clostridium,* and a bacterium of the genus *Staphylococcus.*

More preferably, the microorganisms include at least one species selected from the group consisting of *Alicyclobacillus acidoterrestris, Bacillus cereus, Clostridium perfringens, Clostridium difficile,* and *Staphylococcus aureus.* Isoxanthohumol is effective in preventing contamination of a beverage by these microorganisms.

A beverage for which the growth inhibitor for microorganisms and the method of preventing contamination by microorganisms according to the present invention are used is specifically described below. The beverage is preferably an alcohol beverage, non-alcoholic beer taste beverage, carbonated beverage, functional beverage, or fruit and/or vegetable-based beverage. This is because the above beverages have a pH of 4.6 or lower and desired to have antibacterial action against various microorganisms including *Alicyclobacillus acidoterrestris* which are Thermo-Acidophilic Bacilli harmful to acidic beverages, bacteria *(Bacillus cereus)* belonging to the genus *Bacillus,* and bacteria belonging to the genus *Clostridium* or the genus *Staphylococcus.* In particular, the beverage is more preferably a non-alcoholic beer taste beverage, carbonated beverage, functional beverage, or fruit and/or vegetable-based beverage, more preferably a functional beverage or fruit and/or vegetable-based beverage, because the growth possibility for Thermo-Acidophilic Bacilli in these beverages is high.

The present invention also relates to a beverage containing more than 50 mass ppm and 180 mass ppm or less of isoxanthohumol and having a pH of 4.6 or lower.

The beverage having a pH of 4.6 or lower and containing more than 50 mass ppm of isoxanthohumol can achieve a sufficient antibacterial action against various microorganisms, i.e., achieve the effect of inhibiting the growth of microorganisms. Moreover, the beverage containing 180 mass ppm or less of isoxanthohumol and having a pH of 4.6 or lower can achieve a sufficient effect of inhibiting the growth of microorganisms without spoiling its flavor.

This is because there remains a risk of microbial contamination by Thermo-Acidophilic Bacilli after the thermal sterilization in conformity with the production standards under the Food Sanitation Act where beverages having a pH lower than 4.0 need to be thermally sterilized at 65°C for 10 minutes or under equivalent or better conditions, and those having a pH of 4.0 or higher and lower than 4.6 at 85°C for 30 minutes or under equivalent or better conditions. For example, there is a report that in order to reduce the number of viable bacteria belonging to the genus *Alicyclobacillus* to 1/10, heating in the case of a sterilization temperature of 90°C needs to be run for 10 minutes or longer (Food & Packaging, 2015, Vol. 56, No. 3). This article suggests that sterilization under the conditions in conformity with the Food Sanitation Act may be insufficient to kill Thermo-Acidophilic Bacilli in soft drinks having a pH lower than 4.6.

The beverage of the present invention preferably contains 60 mass ppm or more of isoxanthohumol.

The amount of isoxanthohumol can be measured by, for example, a quantitative analysis using a high performance liquid chromatograph (HPLC) or an LC-MS/MS system (TSQ Quantiva, Thermo Fisher Scientific Inc.). With a high performance liquid chromatograph (HPLC), the amount of isoxanthohumol can be measured by a method under the following conditions, for example.

### (Basic conditions)

Device: SHIMADZU LC-20AD (available from Shimadzu Corporation)
Flow rate: 1.0 mL/min
Analysis time: 25 min/sample
Column: Nomura Chemicals Develosil C30-UG-5, 4.6 mmφ × 150 mm
Column temperature: 40°C
Detector: SPD-20A
Detection wavelength: 280 nm

### (Mobile phase)

Phase A: 0.1% formic acid aqueous solution
Phase B: 0.1% formic acid-containing acetonitrile

### (Gradient conditions)

Table 1 shows gradient conditions. The percentage (%) of phase B is v/v%.

**[Table 1]**

| Analysis time (min) | Phase A | Phase B |
|---|---|---|
| 0 | 85 | 15 |
| 1.5 | 85 | 15 |
| 6 | 0 | 100 |
| 14 | 0 | 100 |
| 20 | 85 | 15 |
| 25 | 85 | 15 |

The beverage of the present invention is preferably an alcohol beverage, non-alcoholic beer taste beverage, carbonated beverage, functional beverage, or fruit and/or vegetable-based beverage.

Examples of the alcohol beverage include beer, beer-based beverages, and alcohol beverages other than the beer and beer-based beverages.

When the beverage of the present invention is a beer-based beverage, preferably, it is low-malt beer or beer-like beverage.

When the beverage of the present invention is an alcohol beverage other than the beer and beer-based beverages, preferably, it is *shochu,* a *shochu* highball, liqueur, cocktail, spirit, or whisky.

The term "non-alcoholic beer taste beverage" as used herein refers to carbonated beverages with beer-like flavors of non-fermented, non-alcohol type, which are substantially free of alcohols. Here, the non-alcoholic beer taste beverage does not exclude beverages containing a very small amount (undetectable degree) of alcohol.

When the beverage of the present invention is a carbonated beverage, preferably, it is a cola-flavored beverage, clear carbonated beverage, ginger ale, fruit juice-based carbonated beverage, milk-containing carbonated beverage, or sugarless carbonated beverage.

When the beverage of the present invention is a functional beverage, preferably, it is a sports drink, energy drink, health-supporting beverage, or jelly drink pouch.

When the beverage of the present invention is a fruit and/or vegetable-based beverage, preferably, it is a 100% fruit juice, fruit-containing beverage, soft drink with a low fruit juice content, pulp-containing fruit juice, or pulp-containing beverage.

The beverage of the present invention is preferably a non-alcoholic beer taste beverage, carbonated beverage, functional beverage, or fruit and/or vegetable-based beverage, more preferably a functional beverage or fruit and/or vegetable-based beverage. Here, the pH of the beverage is 4.6 or lower and may be lower than 4.6. The pH of the beverage is preferably 3.0 or higher.

In a preferred embodiment, the beverage of the present invention has antibacterial action against various microorganisms and is useful as a beverage of which contamination by microorganisms is inhibited. In particular, the beverage is useful as a beverage of which contamination by Thermo-Acidophilic Bacilli is inhibited since it has antibacterial action against Thermo-Acidophilic Bacilli.

The beverage of the present invention is preferably a beverage to be served in the low temperature range of 5°C or lower (e.g., 4°C to 5°C) or the high temperature range of 55°C or higher (e.g., 55°C to 95°C). This is because although the beverage of the present invention contains isoxanthohumol having antibacterial action, isoxanthohumol, contained at a certain concentration that does not spoil the flavor of the beverage, does not spoil the flavor of the beverage in the low temperature range where bitterness and sourness are easily perceived and in the high temperature range where sourness is easily perceived.

The form of the beverage is not particularly limited. Examples include packaged beverages. Packages for the packaged beverages are not particularly limited. Packages in any form and of any material may be used. For example, any of the following commonly used packages can be used: metal packages such as aluminum cans and steel cans; resin containers such as PET bottles; paper containers such as drink cartons; glass containers such as glass bottles; and wooden containers such as barrels. Any of these packages is filled with the beverage and sealed, whereby a packaged beverage can be obtained.

The beverage can be prepared, for example, by adding isoxanthohumol to a material used in the beverage production (e.g., a food raw material or food additive).

### EXAMPLES

The following provides examples that more specifically describe the present invention. The present invention is not limited to these examples.

### <Preparation Example 1>

### Preparation of isoxanthohumol

Isoxanthohumol was isolated and purified from a hop extract (Asama Chemical. Co., Ltd.) by the following method. Specifically, using a hop extract as a raw material, isoxanthohumol was purified by normal-phase column chromatography, reverse phase column chromatography, and preparative HPLC, and the purity was determined to be 95% or higher by HPLC analysis. For HPLC analysis, a Develosil C30-UG-5 column (Nomura Chemical Co., Ltd.) was used, and the detector wavelength to measure UV absorption was 280 nm. The obtained isoxanthohumol was used as a standard sample (having a purity of 95% or higher) in the following experiments.

### <Example 1>

The following microorganisms (bacteria) were pre-incubated as test bacteria to obtain test bacterial solutions. The pre-incubation conditions were as follows. Thermo-Acidophilic Bacilli were aerobically incubated in YSG broth at 50±1°C for two days. *Bacillus cereus* and *Staphylococcus aureus* were each aerobically incubated in Mueller Hinton Broth (Difco, Becton Dickinson and Company) at 37±1°C for 18 to 20 hours. *Bacillus welchii* was anaerobically incubated in GAM broth (Nissui Pharmaceutical Co., Ltd.) at 35±1°C for 18 to 20 hours. *Clostridium difficile* (spores) was anaerobically incubated in a taurocholic acid-containing BHIA medium at 37±1°C for seven days.

### (Test bacteria)

- Thermo-Acidophilic Bacilli *(Alicyclobacillus acidoterrestris* ATCC 49025)
- *Bacillus cereus (Bacillus cereus* IFO 13494)
- *Bacillus wilchii (Clostridium perfringens* JCM 1290)
- *Clostridium difficile* (spores) *(Clostridium difficile* ATCC 9689)
- *Staphylococcus aureus (Staphylococcus aureus* subsp. *aureus* NBRC 12732)

A 10 mg/mL isoxanthohumol solution and serial twofold dilutions thereof were prepared using 99.5% ethanol. Each of the solution and dilutions was added to a predetermined medium (shown in the following Table 2) whose temperature is maintained at 50±1°C after being sterilized and dissolved at a ratio of 1/99 (volume of isoxanthohumol solution/volume of medium solution) and mixed sufficiently. The resulting mixtures were each dispensed into a petri dish and solidified, whereby agar plate media were produced.

Each of the agar plate media was smeared with the pre-incubated test bacterial solution, followed by incubation under the predetermined conditions shown in the Table 2 below. The lowest concentration where the growth of the bacteria was prevented was taken as the minimum inhibitory concentration (MIC). Table 3 below shows the results.

### <Incubation conditions>

**[Table 2]**

| Test bacteria | Medium conditions | Temperature (°C) | Incubation period | Aerobic/ anaerobic |
|---|---|---|---|---|
| Thermo-Acidophilic Bacilli | YSG agar medium | 50±1 | 5 days | Aerobic |
| *Bacillus cereus* | Mueller Hinton Agar | 37±1 | 18 to 20 hours | Aerobic |
| *Bacillus welchii* | GAM agar medium | 35±1 | 24 hours | Anaerobic |
| *Clostridium difficile* (spores) | Taurocholic acid-containing BHIA medium | 37±1 | 18 to 20 hours | Anaerobic |
| *Staphylococcus aureus* | Mueller Hinton Agar | 37±1 | 18 to 20 hours | Aerobic |

**[Table 3]**

| Test bacteria | Test substance | MIC (µg/mL) |
|---|---|---|
| Thermo-Acidophilic Bacilli (*Alicyclobacillus acidoterrestris* ATCC 49025) | Isoxanthohumol | 25 |
| *Bacillus cereus (Bacillus cereus IFO 13494)* | Isoxanthohumol | 50 |
| *Bacillus welchii (Clostridium perfringens JCM 1290)* | Isoxanthohumol | 50 |
| *Clostridium difficile* (spores) *(Clostridium difficile* ATCC 9689) | Isoxanthohumol | 50 |
| *Staphylococcus aureus (Staphylococcus aureus subsp. aureus NBRC 12732)* | Isoxanthohumol | 50 |

Isoxanthohumol was found to inhibit the growth of various microorganisms described above and have antibacterial action, i.e., action to inhibit the growth of the microorganisms.

### INDUSTRIAL APPLICABILITY

The growth inhibitor for microorganisms, the method of preventing contamination of a beverage by microorganisms, and the beverage according to the present invention are useful in the food and beverage field.

## Claims

1. A growth inhibitor for microorganisms comprising
isoxanthohumol as an active ingredient.

2. The growth inhibitor for microorganisms according to claim 1,
which is for beverage use.

3. The growth inhibitor for microorganisms according to claim 1 or 2,
wherein the microorganisms comprise at least one bacterium selected from the group consisting of a bacterium of the genus *Alicyclobacillus,* a bacterium of the genus *Bacillus,* a bacterium of the genus *Clostridium,* and a bacterium of the genus *Staphylococcus.*

4. The growth inhibitor for microorganisms according to any one of claims 1 to 3,
wherein the microorganisms comprise at least one species selected from the group consisting of *Alicyclobacillus acidoterrestris, Bacillus cereus, Clostridium perfringens, Clostridium difficile,* and *Staphylococcus aureus.*

5. A method of preventing contamination of a beverage by microorganisms, comprising
adding isoxanthohumol to a concentration of 25 mass ppm or more.

6. The method of preventing contamination by microorganisms according to claim 5,
wherein isoxanthohumol is added to a concentration of 50 mass ppm or more.

7. The method of preventing contamination by microorganisms according to claim 5 or 6,
further comprising adjusting a pH of the beverage to 4.6 or lower.

8. The method of preventing contamination by microorganisms according to any one of claims 5 to 7,
wherein the microorganisms comprise at least one bacterium selected from the group consisting of a bacterium of the genus *Alicyclobacillus,* a bacterium of the genus *Bacillus,* a bacterium of the genus *Clostridium,* and a bacterium of the genus *Staphylococcus.*

9. The method of preventing contamination by microorganisms according to any one of claims 5 to 8,
wherein the microorganisms comprise at least one species selected from the group consisting of *Alicyclobacillus acidoterrestris, Bacillus cereus, Clostridium perfringens, Clostridium difficile,* and *Staphylococcus aureus.*

10. A beverage comprising more than 50 mass ppm and 180 mass ppm or less of isoxanthohumol and having a pH of 4.6 or lower.

11. The beverage according to claim 10,
which comprises 60 mass ppm or more of isoxanthohumol.

12. The beverage according to claim 10 or 11,
which is an alcohol beverage, non-alcoholic beer taste beverage, carbonated beverage, functional beverage, or fruit and/or vegetable-based beverage.

13. The beverage according to any one of claims 10 to 12,
which is a non-alcoholic beer taste beverage, functional beverage, carbonated beverage, or fruit and/or vegetable-based beverage.
